# EUROPEAN PATENT APPLICATION

(11) **EP 3 104 620 A1**
(43) Date of publication of application: **14.12.2016**
(21) Application number: 16173707.7
(22) Date of filing: 09.06.2016
(51) Int. Cl.: H04N 21/414, H04N 21/431, H04N 21/4788, H04N 21/485

(54) **CONTENT SHARING BROADCAST ZONE**

(30) Priority: 10.06.2015 US 201562173915 P; 02.11.2015 US 201514930226
(71) Applicant: Prysm, Inc., San Jose, CA 95134 (US)
(72) Inventor: POORE, Chris, Zionsville, Indiana 46077 (US); CUZZORT, Adam P., Westfield, Indiana 46074 (US); FISCHER, Brandon, Carmel, Indiana 46033 (US)
(74) Representative: Scilletta, Andrea

(57) **Abstract**

An appliance device is configured to share content in a zone window. A content sharing session may be initiated by a user on the appliance device to share content with at least one client device. In response, the appliance device may display a zone window that is transmitted, via a content stream, to the at least one client device which displays the zone window. The appliance device may detect that a first digital asset has been added to the zone window by a user. In response, the zone window including the first digital asset is transmitted, via another content stream, to the at least one client device which displays the zone window with the first digital asset. In this manner, assets may be dynamically added to a zone window and automatically shared with client devices without requiring restart or interruption of the content sharing session.

## Description

### BACKGROUND OF THE INVENTION

### Field of the Invention

The present invention generally relates to sharing digital content and, more specifically, to a content sharing broadcast zone.

### Description of the Related Art

Currently, digital content may be shared between different computer devices using various techniques. For example, during a content sharing session, the desktop of one computer device may be shared and displayed at other computer devices. As another example, an application of one computer device may be shared and displayed at other computer devices during a content sharing session. After the content sharing session has been started, however, adding any new content is typically restricted and cannot be shared. Thus, current content sharing techniques do not allow for the dynamic and automatic sharing of new content without interruption of the content sharing session.

As the foregoing illustrates, what is needed in the art are more effective techniques for sharing digital content across different computer devices.

### SUMMARY OF THE INVENTION

Various embodiments of the present invention include a computer-implemented method for sharing content across different devices. The method includes causing a zone window to be displayed within a display of a first machine and detecting that a first digital asset has been moved within the zone window. The method further includes, in response to detecting the first digital asset, sharing the first digital asset with at least one client device by transmitting a first content stream to the at least one client device.The first content stream may comprise the zone window and the first digital asset included in the zone window.

At least one advantage of the disclosed technique is that digital assets may be dynamically added to a zone window and automatically shared with client devices.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 is a block diagram of a display system configured to implement one or more aspects of the present invention;
Figure 2 is a conceptual diagram of a collaboration system configured to share content streams across display systems, according to various embodiments of the present invention;
Figure 3 is a conceptual diagram of a collaboration system configured to share a content stream with user devices using a broadcast zone, according to various embodiments of the present invention; and
Figure 4A is a conceptual diagram that illustrates a first asset (A) included in a broadcast zone implemented in the collaboration system of Figure 3, according to various embodiments of the present invention;
Figure 4B is a conceptual diagram that illustrates a second asset (B) that is added to the broadcast zone implemented in the collaboration system of Figure 3, according to various embodiments of the present invention;
Figure 4C is a conceptual diagram that illustrates an asset that is removed from the broadcast zone implemented in the collaboration system of Figure 3, according to various embodiments of the present invention;
Figure 5 illustrates a flow diagram of method steps for automatically and dynamically displaying assets in a broadcast zone window, according to various embodiments of the present invention;
Figure 6 is a conceptual diagram of a collaboration system 600 configured to share a content stream with user devices using a static broadcast zone, according to various embodiments of the present invention; and
Figure 7 is a conceptual diagram of a collaboration system 700 configured to share a content stream with user devices using a dynamic broadcast zone, according to various embodiments of the present invention.

### DETAILED DESCRIPTION

In the following description, numerous specific details are set forth to provide a more thorough understanding of the present invention. However, it will be apparent to one of skill in the art that the present invention may be practiced without one or more of these specific details. In other instances, well-known features have not been described in order to avoid obscuring the present invention.

### System Overview

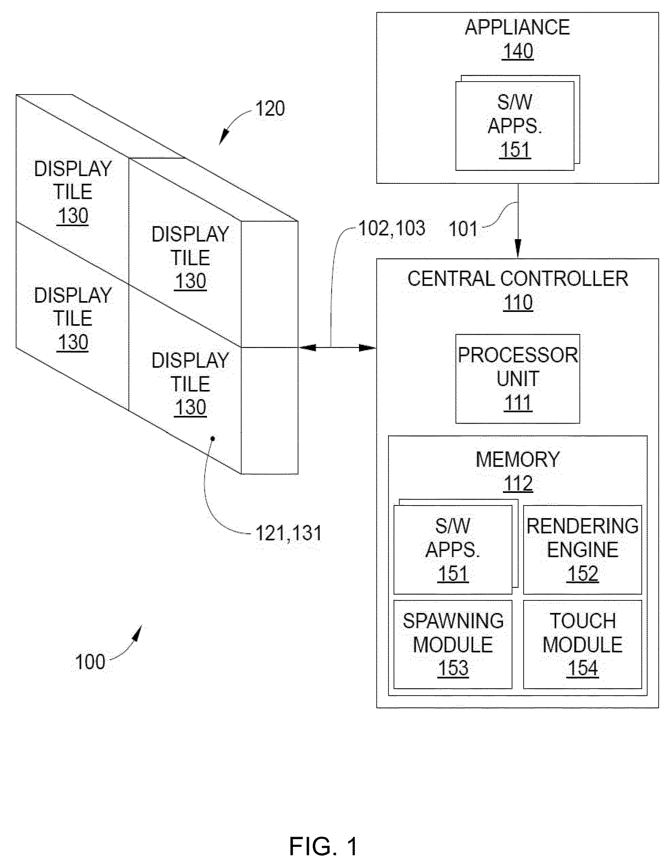

Figure 1 is a block diagram of a display system 100 configured to implement one or more aspects of the present invention. As shown, display system 100 includes, without limitation, a central controller 110, and a display 120. In some embodiments, display 120 is a display wall that includes multiple display tiles. Central controller 110 receives digital image content 101 from an appliance 140 or from an information network or other data routing device, and converts said input into image data signals 102. Thus, digital image content 101 may be generated locally, with appliance 140, or from some other location. For example, when display system 100 is used for remote conferencing, digital image content 101 may be received via any technically feasible communications or information network, wired or wireless, that allows data exchange, such as a wide area network (WAN), a local area network (LAN), a wireless (Wi-Fi) network, and/or the Internet, among others.

Central controller 110 includes a processor unit 111 and memory 112. Processor unit 111 may be any suitable processor implemented as a central processing unit (CPU), a graphics processing unit (GPU), an application-specific integrated circuit (ASIC), a field programmable gate array (FPGA), any other type of processing unit, or a combination of different processing units, such as a CPU configured to operate in conjunction with a GPU. In general, processor unit 111 may be any technically feasible hardware unit capable of processing data and/or executing software applications to facilitate operation of display system 100, including software applications 151, rendering engine 152, spawning module 153, and touch module 154. During operation, software applications 151, rendering engine 152, spawning module 153, and touch module 154 may reside in memory 112. Alternatively or additionally, software applications 151 may also reside in appliance 140. In some embodiments, one or more of 151-154 may be implemented in firmware, either in central controller 110 and/or in other components of display system 100.

Memory 112 may include volatile memory, such as a random access memory (RAM) module, and non-volatile memory, such as a flash memory unit, a read-only memory (ROM), or a magnetic or optical disk drive, or any other type of memory unit or combination thereof. Memory 112 is configured to store any software programs, operating system, drivers, and the like, that facilitate operation of display system 100, including software applications 151, rendering engine 152, spawning module 153, and touch module 154.

Display 120 may include the display surface or surfaces of any technically feasible display device or system type, including but not limited to the display surface of a light-emitting diode (LED) display, a digital light (DLP) or other projection displays, a liquid crystal display (LCD), optical light emitting diode display (OLED), laser-phosphor display (LPD) and/or a stereo 3D display all arranged as a single stand alone display, head mounted display or as a single or multi-screen tiled array of displays. Display sizes may range from smaller handheld or head mounted display devices to full wall displays. In the example illustrated in Figure 1, display 120 includes a plurality of display light engine and screen tiles 130 mounted in a 2x2 array. Other configurations and array dimensions of multiple electronic display devices, e.g. 1x4, 2x3, 5x6, etc., also fall within the scope of the present invention.

In operation, display 120 displays image data signals 102 output from controller 110. For a tiled display, as illustrated in Figure 1, image data signals 102 are appropriately distributed among display tiles 130 such that a coherent image is displayed on a display surface 121 of display 120. Display surface 121 typically includes the combined display surfaces of display tiles 130. In addition, display 120 includes a touch-sensitive surface 131 that extends across part or all surface area of display tiles 130. In one embodiment, touch-sensitive surface 131 senses touch by detecting interference between a user and one or more beams of light, including, e.g., infrared laser beams. In other embodiments, touch sensitive surface 131 may rely on capacitive touch techniques, including surface capacitance, projected capacitance, or mutual capacitance, as well as optical techniques, acoustic wave-based touch detection, resistive touch approaches, and so forth, without limitation. Touch-sensitive surface 131 enables users to interact with assets displayed on the wall using touch gestures including tapping, dragging, swiping, and pinching. These touch gestures may replace or supplement the use of typical peripheral I/O devices such as an external keyboard or mouse, although touch-sensitive surface 131 may receive inputs from such devices, as well.

In the context of this disclosure, an "asset" may refer to any interactive renderable content that can be displayed on a display, such as display 120, among others. Such interactive renderable content is generally derived from one or more persistent or non-persistent content streams that include sequential frames of video data, corresponding audio data, metadata, flowable/reflowable unstructured content, and potentially other types of data. Generally, an asset may be displayed within a dynamically adjustable presentation window. For simplicity, an asset and corresponding dynamically adjustable presentation window are generally referred to herein as a single entity, i.e., an "asset." Assets may comprise content sources that are file-based, web-based, or Live Source. Assets may include images, videos, web browsers, documents, renderings of laptop screens, presentation slides, any other graphical user interface (GUI) of a software application, and the like. An asset generally includes at least one display output generated by a software application, such as a GUI of the software application. In one embodiment, the display output is a portion of a content stream. In addition, an asset is generally configured to receive one or more software application inputs via a gesture-sensitive display surface of a collaboration client system 140, i.e., inputs received via the gesture-sensitive display surface are received by the asset and treated as input for the software application associated with the asset. Thus, unlike a fixed image, an asset is a dynamic element that enables interaction with the software application associated with the asset, for example, for manipulation of the asset. For example, an asset may include select buttons, pull-down menus, control sliders, etc. that are associated with the software application and can provide inputs to the software application.

As also referred to herein, a "workspace" is a digital canvas on which assets associated therewith, and corresponding content streams, are displayed within a suitable dynamic presentation window on display 120. Typically, a workspace corresponds to the all of the potential render space of display 120, so that only a single workspace can be displayed on the surface thereof. However, in some embodiments, multiple workspaces may be displayed on display 120 concurrently, such as when a workspace does not correspond to the entire display surface. Assets associated with a workspace, and content streams corresponding to those content streams, are typically displayed in the workspace within a suitable presentation window that has user-adjustable display height, width, and location. Generally, a workspace is associated with a particular project, which is typically a collection of multiple workspaces.

In one embodiment, a server stores metadata associated with specific assets, workspaces, and/or projects that is accessible to display system 100. For example, such metadata may include which assets are associated with a particular workspace, which workspaces are associated with a particular project, the state of various setting for each workspace, annotations made to specific assets, etc. In some embodiments, asset metadata may also include size of the presentation window associated with the asset and position of the presentation window in a particular workspace, and, more generally, other types of display attributes. In some embodiments, asset size and location metadata may be calculated metadata that are dimensionless. In such embodiments, the asset size may be in terms of aspect ratio, and asset position in terms of percent location along an x- and y-axis of the associated workspace. Thus, when instances of display 120 are not uniformly sized, each asset within a shared workspace can still be positioned and sized proportional to the specific instance of display 120 in which is it being displayed. When multiple display systems 100 separately display a similar shared workspace, each such display system 100 may configure the local version of that shared workspace based on the corresponding metadata.

Touch-sensitive surface 131 may be a "multi-touch" surface, which can recognize more than one point of contact on display 120, enabling the recognition of complex gestures, such as two or three-finger swipes, pinch gestures, and rotation gestures as well as multiuser two, four, six etc. hands touch or gestures. Thus, one or more users may interact with assets on display 120 using touch gestures such as dragging to reposition assets on the screen, tapping assets to display menu options, swiping to page through assets, or using pinch gestures to resize assets. Multiple users may also interact with assets on the screen simultaneously. Again, examples of assets include application environments, images, videos, web browsers, documents, mirroring or renderings of laptop screens, presentation slides, content streams, and so forth. Touch signals 103 are sent from a touch panel associated with a display 120 to central controller 110 for processing and interpretation.

It will be appreciated that the system shown herein is illustrative only and that variations and modifications are possible. For example, software applications 151, rendering engine 152, spawning module 153, and touch module 154 may reside outside of central controller 110.

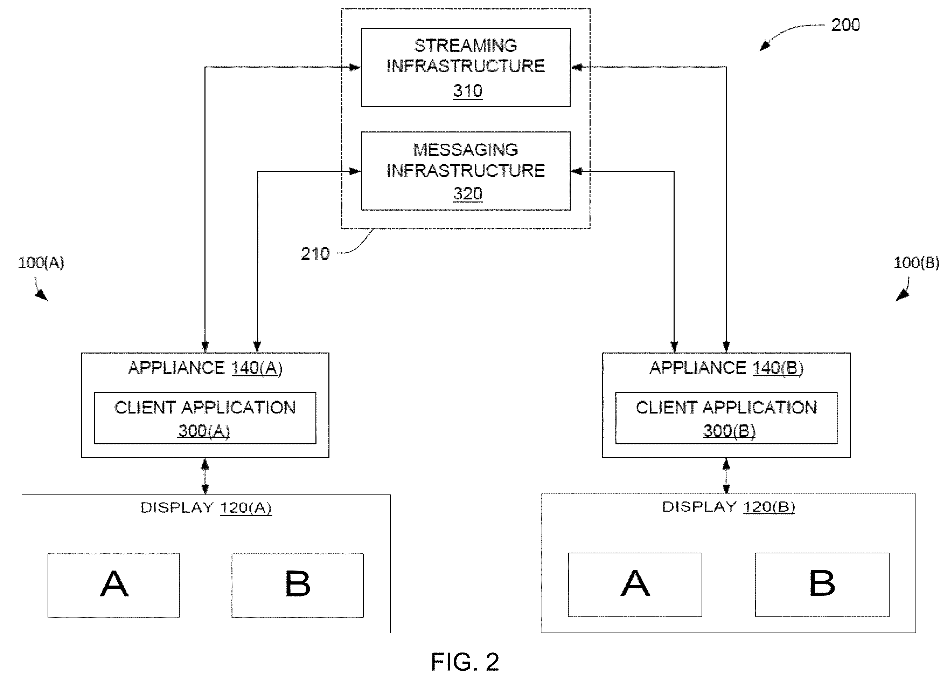

Figure 2 is a conceptual diagram of a collaboration system 200 configured to share content streams across display systems, according to various embodiments of the present invention. As shown, collaboration system 200 includes, without limitation, display systems 100(A) and 100(B) coupled together via a communication infrastructure 210. As shown in Figure 2, the communication infrastructure 210 includes streaming infrastructure 310 and messaging infrastructure 320. Additionally, display system 100(A) is shown to include appliance 140(A) as well as display 120(A), and display system 100(B) is shown to include appliance 140(B) as well as display 120(B). For illustrative purposes, the appliances 140(A) and 140(B) each include a central controller 110 (not shown). In one embodiment, each of displays 120(A) and/or 120(B) represents a different instance of display 120 of Figure 1 Appliance devices 140(A) and 140(B) include client applications 300(A) and 300(B), respectively.

Display system 100(A) is configured to share a content stream A, via communication infrastructure 210, with display system 100(B). In response, display system 100(B) is configured to retrieve content stream A from communication infrastructure 210 and to display that content stream on display 120(B) with its content stream B. Likewise, display system 100(B) is configured to share content stream B, via communication infrastructure 210, with display system 100(A). In response, display system 100(A) is configured to retrieve content stream B from communication infrastructure 210 and to display that content stream on display 120(A) with its content stream A. In this fashion, display systems 100(A) and 100(B) are configured to coordinate with one another to generate a shared workspace that includes content streams A and B. Content streams A and B may be used to generate different assets rendered within the shared workspace. In one embodiment, each of display systems 100(A) and 100(B) perform a similar process to reconstruct the shared workspace, thereby generating a local version of that workspace that is similar to other local versions of the workspace reconstructed at other display systems. As a general matter, the functionality of display systems 100(A) and 100(B) are coordinated by client applications 300(A) and 300(B), respectively.

Client applications 300(A) and 300(B) are software programs that generally reside within a memory (not shown) associated with the respective appliances 140(A) and 140(B). Client applications 300(A) and 300(B) may be executed by a processor unit (not shown) included within the respective computing devices. When executed, client applications 300(A) and 300(B) setup and manage the shared workspace discussed above in conjunction with Figure 2, which, again, includes content streams A and B. In one embodiment, the shared workspace is defined by metadata that is accessible by both display systems 100(A) and 100(B). Each such display system may generate a local version of the shared workspace that is substantially synchronized with the other local version, based on that metadata.

In doing so, client application 300(A) is configured to transmit content stream A to streaming infrastructure 310 for subsequent streaming to display system 100(B). Client application 300(A) also transmits a notification to display system 100(B), via messaging infrastructure 320, that indicates to display system 100(B) that content stream A is available and can be accessed at a location reflected in the notification. In like fashion, client application 300(B) is configured to transmit content stream B to streaming infrastructure 310 for subsequent streaming to display system 100(A). Client application 300(B) also transmits a notification to display system 100(A), via messaging infrastructure 320, that indicates to display system 100(A) that content stream B is available and can be accessed at a location reflected in the notification. The notification indicates that access may occur from a location within streaming infrastructure 310.

Client applications 300(A) and 300(B) are thus configured to perform similar techniques in order to share content streams A and B, respectively with one another. When client application 300(A) renders content stream A on display 120(A) and, also, streams content stream B from streaming infrastructure 310, display system 100(A) thus constructs a version of a shared workspace that includes content stream A and B. Similarly, when client application 300(B) renders content stream B on display 120(B) and, also, streams content stream A from streaming infrastructure 310, display system 100(A) similarly constructs a version of that shared workspace that includes content streams A and B.

The display systems 100(A) and 100(B) discussed herein are generally coupled together via streaming infrastructure 310 and messaging infrastructure 320. Each of these different infrastructures may include hardware that is cloud-based and/or collocated on-premises with the various display systems. However, persons skilled in the art will recognize that a wide variety of different approaches may be implemented to stream content streams and transport notifications between display systems.

### Scaling Technique

Among other things, the embodiments contemplated herein pertain to displaying a workspace on each of a plurality of displays, where each workspace includes substantially the same configuration of digital assets. In particular, the resolutions associated with the displays are analyzed to determine a reference resolution. In some embodiments, the reference resolution is the lowest display resolution (or the highest display resolution) associated with the displays. A scaling factor is then determined for each display based on the reference resolution. Next, for each workspace, the digital asset is rendered according to the reference resolution and resized based on the scaling factor associated with the corresponding display. By first rendering a digital asset according to a reference resolution and then resizing the digital asset based on a scaling factor, the contents and relative size of the digital asset may be generated in a substantially uniform manner across displays having different resolutions.

In one embodiment, workspaces having substantially same configuration of digital assets are to be displayed on both a first display having a resolution of 1920x1080 and a second display having a resolution of 3840x2160. Accordingly, a reference resolution of 1920x1080 (the lowest display resolution)is determined for the displays. Next, a scaling factor of 1 is determined for the first display, and a scaling factor of 2 is determined for the second display. Then, when a digital asset (e.g., a web browser) is to be displayed with substantially the same configuration (e.g., relative size, contents, aspect ratio, etc.) within each of the workspaces, the digital asset is rendered for each display according to the reference resolution and scaled based on the scaling factor associated with each display.

For example, assuming that viewport content associated with a web browser occupying a quarter of a workspace is to be displayed in a uniform manner on each of the first display and the second display, for each workspace, the viewport content may be rendered at a resolution of 960x540. The rendered viewport content is then scaled by a factor of 1 (e.g., no scaling) to generate a 960x540 viewport size for the workspace associated with the first display and scaled by a factor of 2 to generate a 1920x1080 viewport size for the workspace associated with the second display. Accordingly, the web browser and its content are rendered according to the reference resolution for each workspace, ensuring that each depiction of the content is substantially the same.

In one embodiment, workspace assets include assets that import and render reflowable content, such as content having a structure that is not fully formatted. The reflowable content may include text, graphics, images, etc.

In one embodiment, the server tracks the scale or resolution of each asset window in relation to the size, resolution, and/or aspect ratio of the asset window for each display system within the collaboration workspace. Consequently, when one user at a first collaboration display system opens a reflowable content facilitated asset, a corresponding asset will open at a second collaboration display system, which may have a different size, resolution, and/or aspect ratio than the first collaboration display system. Accordingly, the asset will be opened on the second collaboration display system at dimensions that correspond to the original asset being opened. When the user at the first collaboration display retrieves content to be opened by the asset, the source of the retrieved content is shared with the asset at the second collaboration display system. In some embodiments, a third system may comprise a repository that stores/holds the content first retrieved by one or more distinct collaboration display systems that is then shared by all collaboration display locations, for example the second collaboration display system, where each of the collaboration display location systems may comprise a repository that stores/holds the content retrieved from the third system .The content is then retrieved by the asset associated with the second collaboration display system. However, since the second collaboration display system is at a different size, resolution, and/or aspect ratio than the first collaboration display system, an appropriate scaling factor is used by the second collaboration display system asset and applied to the retrieved content in order to render and display the asset's retrieved content in substantially the same manner as the asset displaying the retrieved content on the first collaboration display system, thereby showing substantially no more, nor no less content within the first collaboration display system's asset.

In various embodiments, metadata including workspace resolutions, native display resolutions, and/or scaling factors associated with one or more displays may be transmitted via a messaging infrastructure between appliances coupled to the displays. For example, each appliance may transmit a notification that specifies attributes (e.g., the native resolution of a display) to a central controller, which then determines a reference resolution and/or scaling factors for the displays. The notifications may further include one or more locations (e.g., URLs) associated with a particular digital asset.

### Broadcast Zone Feature

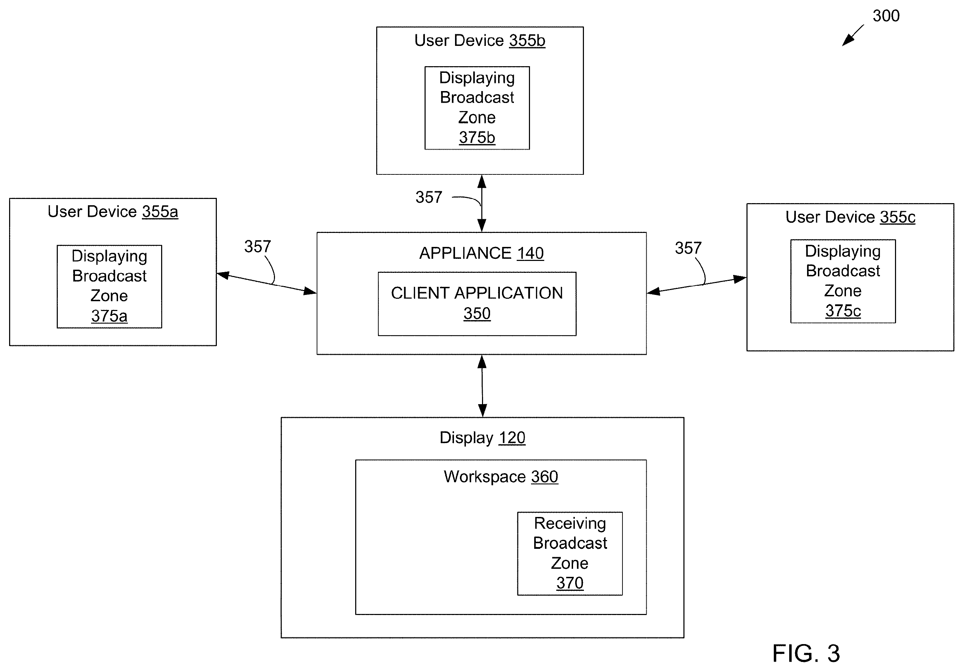

Figure 3 is a conceptual diagram of a collaboration system 300 configured to share a content stream with user devices using a broadcast zone, according to various embodiments of the present invention.

In some embodiments, a broadcast zone window comprises a moveable, resizable window that is placed inside of a workspace. The broadcast zone window may comprise a rectangle window with an aspect ratio that is variable (e.g., 16:9). In some embodiments, a user may move and resize the broadcast zone window anywhere within the workspace, and/or the broadcast zone window may automatically snapping to certain preset sizes/locations within the workspace. The broadcast zone window may be used to share a cropped sub-portion/sub-area of the workspace with remote users. The broadcast zone window may allow the sharing of content (e.g., a single asset or multiple assets) that is only within the broadcast zone window with the remote users.

As shown, collaboration system 300 includes, without limitation, an appliance 140 connected to a plurality of user devices 355 (such as 355a, 355b, and 355c). The appliance 140 is connected with a display 120.The appliance 140includes a central controller 110 (not shown) and client application engine 350. The central controller 110 and display 120 are described above in relation to Figures 1-2. Client application engine 350 comprises a software program that generally reside within a memory (not shown) and is executed by a processor unit (not shown) included within the appliance 140. When executed, client application engine 350 performs embodiments described herein.

In some embodiments, the collaboration system 300 of Figure 3 may share the content stream with user devices and operate concurrently with the operations of the collaboration system 200 of Figure 2 for sharing content streams across display systems. In these embodiments, an appliance 140a may share content of a broadcast zone window with user devices 355 while independently and concurrently sharing the content of the entire display 120a with another appliance 140b (which displays the shared content on another display 120b), as described above in relation to Figure 2. Thus, the collaboration techniques described in relation to the collaboration system 300 of Figure 3 may operate independently and concurrently with the collaboration techniques described in relation to the collaboration system 200 of Figure 2.

Returning to Figure 3, each user device 355 may be a computing device comprising a processor(s), memory, and input/output (I/O) devices (not shown).For example, a user device 355 may comprise a computer desktop, laptop, tablet, phone, or other portable device.The I/O devices incudes input devices capable of receiving user input (e.g., mouse, keyboard, touchscreen, etc.)and output devices, including a display, or any other type of hardware configured to display content streams received from the appliance 140. Each user device 355 is connected with the appliance 140 through a data connection 357 (e.g., via an auxiliary digital video output on the appliance 140). The data connection 357 may be a high-definition multimedia interface (HDMI) cable, analog connection, wireless connection, or any other technically feasible type of data connection. Each user devices 355 is configured to receive a content stream from the client application engine 350 executing on the appliance 140 and to display the content stream on the display.

The client application engine 350 generates and displays a workspace window 360 within the display 120. The workspace window 360 may contain one or more digital assets that are displayed across multiple display systems 100(A) and 100(B), as described in relation to Figure 2. In further embodiments, the client application engine 350 may also generate and display a broadcast zone window 370 within the workspace window 360 on the display 120 of the appliance 140. The client application engine 350 may also generate a content stream comprising a broadcast zone window 375 that corresponds to the broadcast zone window 370within the workspace window 360. The content stream may be configured such that the corresponding broadcast zone window 375, and any assets included therein, is displayed at a user device 355. The client application engine 350 may automatically transmit the content stream to each user device 355 (such as user devices 355a, 355b, and 355c), each user device 355 receiving and displaying the corresponding broadcast zone window 375 (such as 375a, 375b, and 375c) including any assets therein. As used herein, the broadcast zone window 370 within the workspace window 360 on the appliance side may be referred to as a "receiving" broadcast zone window 370 as it receives one or more assets that are added by a user. As also used herein, each corresponding broadcast zone window 375 on the user side may be referred to as a "displaying" broadcast zone window 375 as it displays the one or more assets added to the receiving broadcast zone window 370, in accordance with embodiments described herein.

On the appliance side, the receiving broadcast zone window 370 may comprise a sub-set/sub-area of the workspace window 360 and comprise an x-y spatial dimension that is less than the full spatial dimension of the workspace window 360 which may be positioned anywhere within the workspace window 360. In other embodiments, the broadcast zone window 370 may comprise the entire workspace window 360. For example, the receiving broadcast zone window 370 may be defined by a top-left x, y coordinate within the workspace window 360 and a size (width, height) that constitutes a shape of the receiving broadcast zone window 370 (e.g., rectangle). For example, the receiving broadcast zone window 370 location and dimensions may be specified through a web administration portal that receive user definitions of x, y coordinates and the size or resolution of the location. In other examples, the receiving broadcast zone window 370 location and dimensions may be specified through a user interface that allows a user to dynamically select and change the location and dimensions visually. For example, the receiving broadcast zone window 370 may comprise a displayed rectangular shape which the user could drag, size and position to the desired location and size that is to be broadcast to the user devices 355. In other embodiments, the receiving broadcast zone window 370 may comprise a shape other than a rectangular shape. In some embodiments, if the aspect ratio of the receiving broadcast zone window 370 does not match the aspect ratio of the displaying broadcast zone window 375, black bars may be shown above and below the signal (i.e. letterboxing) or on either side of the signal at the displaying broadcast zone window 375. The user may also dynamically change the location and dimensions of the receiving broadcast zone window 370, e.g., by dragging or resizing the rectangle shape.

Any assets that are added to the receiving broadcast zone window 370 in the workspace 360 may be automatically and dynamically displayed on each connected user device 355 in the corresponding displaying broadcast zone window 375. As used herein, an asset is "added" to the receiving broadcast zone window 370 when an asset within the display 120 is originally located and visible outside the receiving broadcast zone window 370 is caused to be located and visible within the receiving broadcast zone window 370 (e.g., through drag and drop operations). As used herein, an asset added to the receiving broadcast zone window 370 is "automatically" and "dynamically" shared and displayed at each user device 355 in that the asset is shared with each user device 355 in real-time without requiring restart or interruption of a content sharing session between the appliance 140 and the user devices 355 and without requiring further interactions or intervention from the user (other than adding the asset to the receiving broadcast zone window 370).

Assets may be added (by a user of the appliance 140) to the broadcast zone window 370 from within the workspace window 360 (i.e., "originate" from within the workspace window 360) or from outside the workspace window 360 (i.e., "originate" from outside the workspace window 360). When originating from within the workspace window 360, the asset is originally located/displayed within the workspace window 360 (but outside the broadcast zone window 370) and then re-located/re-displayed (added) to the receiving broadcast zone window 370. When originating from outside the workspace window 360, the asset is originally located/displayed in the remaining desktop area of the display 120 that is outside the workspace window 360, and then re-located/re-displayed (added) to the receiving broadcast zone window 370. Assets may be added by a user to the receiving broadcast zone window 370 using various techniques, such as dragging and dropping assets to the broadcast zone window 370 using a mouse or touch screen capabilities, etc. Assets added to the broadcast zone window 370 may also be later moved and repositioned with the broadcast zone window 370 based on the user's preference.

The client application engine 350 may configure a content stream for display on each connected user device 355 for dynamically and automatically displaying any assets added to the receiving broadcast zone window 370. The client application engine 350 may configure the content stream in such a way that the assets are displayed in the displaying broadcast zone window 375 at each user device 355 in a substantially similar configuration as displayed in the receiving broadcast zone window 370. For example, each asset added and displayed in the receiving broadcast zone window 370 may be displayed within each displaying broadcast zone window 375 at each user device 355 with substantially similar relative size, position, and/or aspect ratio as displayed within the receiving broadcast zone window 370.For example, an added asset may comprise a presentation for a meeting whereby the presenter(s) are located on the appliance side and possibly hundreds of viewers are located around the world on the client side. All presentation assets may be shown on the display 120 outside of the receiving broadcast zone window 370 and visible and available to the presenter(s) but are not shared with the viewers until the presentation asset is added to the receiving broadcast zone window 370.

In some embodiments, the client application engine 350 may configure the content stream using the scaling techniques described herein. Thus, each asset may be rendered according to a reference resolution and scaled based on the scaling factor associated with the display of each user device 355. In this manner, all assets added and displayed in the receiving broadcast zone window 370 are automatically and dynamically displayed with substantially the same configuration in the displaying broadcast zone window 375 at each user device 355.

In addition, the client application engine 350 may configure the content stream so that the assets are interactive or non-interactive. For interactive assets, each user of a user device 355 may interact with the asset after being received and displayed in the displaying broadcast zone window 375 (e.g., via a mouse, touchscreen, etc.). For non-interactive assets, the users of the user devices 355 may only view the asset in the displaying broadcast zone windows 375.

Upon receiving the content stream from the appliance 140, each user device 355 displays the content stream to produce the corresponding displaying broadcast zone window 375 that displays all assets added to the receiving broadcast zone window 370. In some embodiments, each user device 355 comprises a conventional computing device (e.g., any HTML capable device) and does not require specialized applications to be installed to receive and display the content stream and the displaying broadcast zone window 375. In these embodiments, the user device 355 only requires a data connection 357 (e.g., high-definition multimedia interface (HDMI) cable, analog connection, etc.)to the appliance 140 for receiving and displaying the content stream and displaying broadcast zone window 375. For example, the appliance 140 may send the content stream (including the broadcast zone window and assets) to each user device 355 using HTML and a custom playback control that allows for streaming of the content stream and also allows for interactivity to be returned/passed back to the appliance 140for enabling interactivity for interactive assets, for example, by capturing user input (e.g., touch/mouse input) via JavaScript and sending the captured user input over socket messages back to the appliance 140.

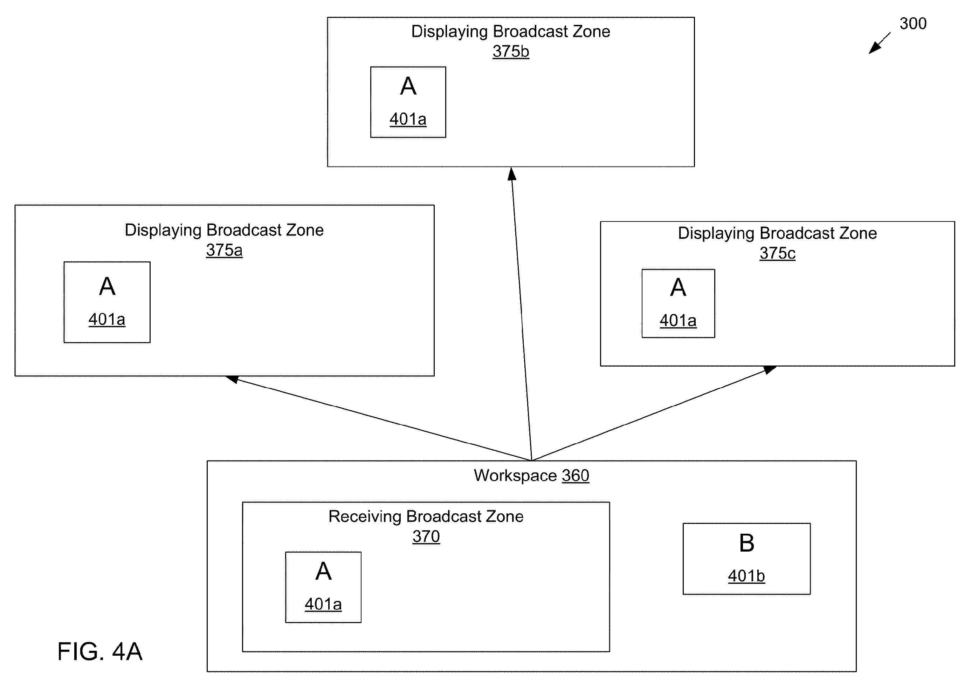

Figures 4A-4C are conceptual diagrams that illustrate a broadcast zone implemented in the collaboration system 300 of Figure 3, according to various embodiments of the present invention. Figure 4A is a conceptual diagram that illustrates a first asset (A) included in the broadcast zone implemented in the collaboration system 300 of Figure 3. As shown in Figure 4A, a broadcast zone function has been enabled on the appliance side which begins a content sharing session between the appliance 140 and each distributively connected user device 355. Enabling the broadcast zone function causes the client application engine 350 to produce a receiving broadcast zone 370 within the workspace window 360. In the example of Figure 4A, the receiving broadcast zone 370 is currently displaying the first asset 401 a (marked A). The client application engine 350 generates a content stream comprising a displaying broadcast zone window 375 that corresponds to the receiving broadcast zone window 370, the displaying broadcast zone window 375 comprising the first asset 401 a. The content stream is received by each user device 355 (such as user devices 355a, 355b, and 355c) which then displays the displaying broadcast zone window 375 (such as 375a, 375b, and 375c). Each displaying broadcast zone 375 displays the first asset 401 a. In some embodiments, the first asset 401 a may be displayed in each displaying broadcast zone 375 in a substantially similar configuration as displayed in the receiving broadcast zone window 370.

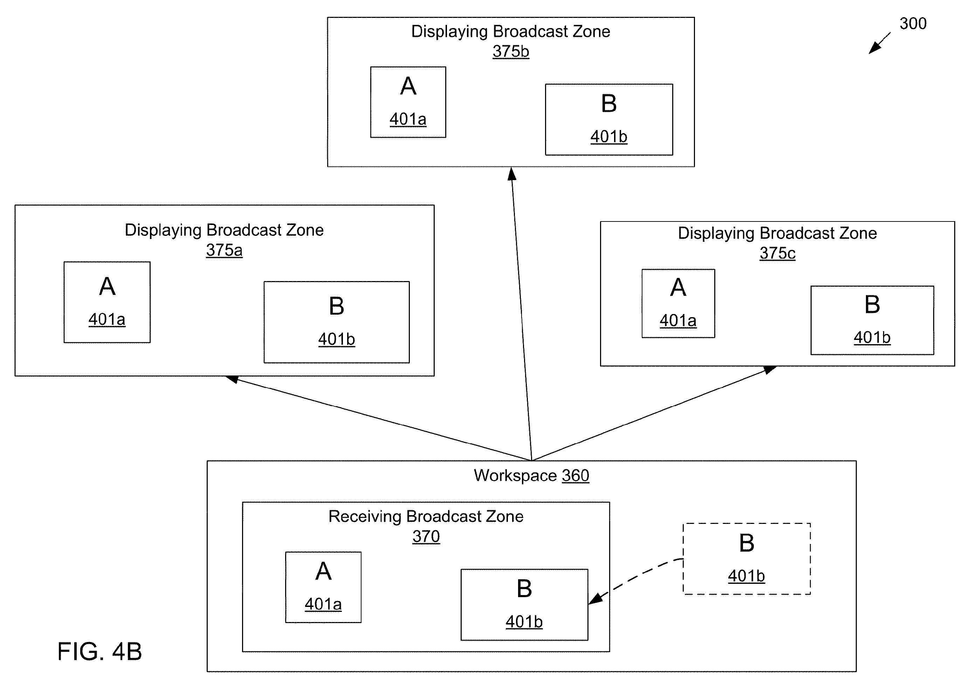

Figure 4B is a conceptual diagram that illustrates a second asset (B) included in the broadcast zone implemented in the collaboration system 300 of Figure 3. As shown in Figure 4B, the second asset 401 b (marked B) is added by a user to the receiving broadcast zone 370. In response, the client application engine 350 generates another content stream comprising a displaying broadcast zone window 375 that corresponds to the receiving broadcast zone window 370, the displaying broadcast zone window 375 including the first asset 401 a and the newly added second asset 401 b. The content stream is received by each user device 355 and each displaying broadcast zone 375 displays the first asset 401 a and the second asset 401 b. In some embodiments, the first asset 401 a and the second asset 401 b may be displayed in each displaying broadcast zone 375 in a substantially similar configuration as displayed in the receiving broadcast zone window 370.

As shown in Figure 4B, the second asset 401 b is added to the receiving broadcast zone window 370 from within the workspace window 360 (originates from within the workspace window 360). In other embodiments, the second asset 401 b is added to the receiving broadcast zone window 370 from outside the workspace window 360 (originates from the desktop area that is outside the workspace window 360). In some embodiments, the second asset 401 b is added to the receiving broadcast zone window 370 and, in response, is dynamically and automatically displayed in each corresponding displaying broadcast zone window 375 while content is currently/continuing to be shared in a content sharing session between the receiving broadcast zone window 370 and each displaying broadcast zone window 375. For example, the second asset 401 b may be added to the receiving broadcast zone window 370 and, in response, dynamically and automatically displayed in each corresponding displaying broadcast zone window 375 while the first asset 401 a is already currently being displayed in the receiving broadcast zone window 370 and each displaying broadcast zone window 375 during a content sharing session. The second asset 401 b may comprise an asset that is not previously shared with (transmitted to) and displayed at each user device 355 until the second asset 401 b is added to the receiving broadcast zone window 370.

In some embodiments, after being added to the receiving broadcast zone window 370, the content stream comprising the second asset 401 b is dynamically and automatically transmitted to each client device 355 without requiring further interactions or intervention from a user. Thus, after being added to the receiving broadcast zone window 370, the second asset 401 b is dynamically and automatically displayed in each corresponding displaying broadcast zone window 375 without requiring further interactions or intervention from a user. Also, the newly added second asset 401 b may be dynamically and automatically shared (transmitted) and displayed in each displaying broadcast zone window 375 without requiring restart of the broadcast zone function or restart of the content sharing session on the appliance side. Thus, the second asset 401 b may be dynamically added to the receiving broadcast zone window 370 and automatically shared (transmitted) and displayed in each displaying broadcast zone window 375 without interruption and/or restart of the content sharing session between the receiving broadcast zone window 370 on the appliance 140 side and each displaying broadcast zone window 375 on the user 355 side.

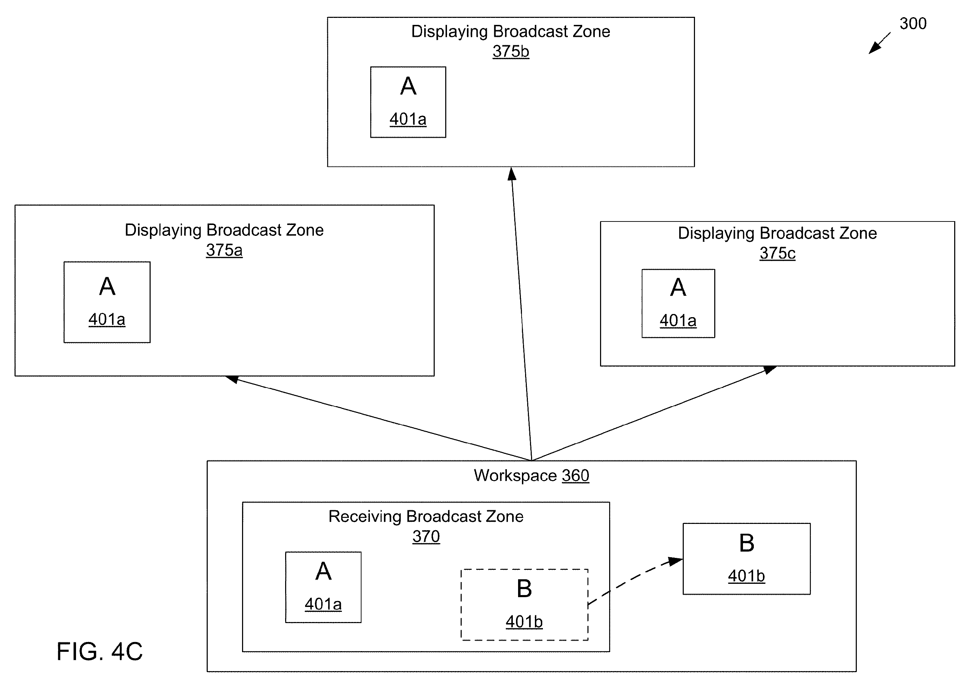

Figure 4C is a conceptual diagram that illustrates an asset that is removed from the broadcast zone implemented in the collaboration system 300 of Figure 3.As shown in Figure 4C, the second asset 401 b (marked B) is removed by a user from the receiving broadcast zone 370. In response, the client application engine 350 generates another content stream comprising a displaying broadcast zone window 375 that corresponds to the receiving broadcast zone window 370, the displaying broadcast zone window 375 now including only the first asset 401 a (the second asset 401 b being removed). The content stream is received by each user device 355 and each displaying broadcast zone 375 displays only the first asset 401 a (with the second asset 401 b removed).

In some embodiments, the second asset 401 b is removed from the receiving broadcast zone window 370 and, in response, is dynamically and automatically removed from display in each corresponding displaying broadcast zone window 375 while content is currently/continuing being shared between the receiving broadcast zone window 370 and each displaying broadcast zone window 375. In some embodiments, an asset may be removed from the receiving broadcast zone window 370 by dragging and dropping the asset outside of the receiving broadcast zone window 370 and/or workspace 360. For example, the second asset 401 b may be removed from the receiving broadcast zone window 370 and, in response, dynamically and automatically removed from display in each corresponding displaying broadcast zone window 375 while the first asset 401 a is currently being displayed in the receiving broadcast zone window 370 and each displaying broadcast zone window 375.

In some embodiments, after being removed from the receiving broadcast zone window 370, the content stream not including the removed second asset 401 b is dynamically and automatically transmitted to each client device 355 without requiring further interactions or intervention from a user. Thus, after being removed from the receiving broadcast zone window 370, the second asset 401 b is dynamically and automatically removed from display in each corresponding displaying broadcast zone window 375 without requiring further interactions or intervention from a user. Also, the newly removed second asset 401 b may be dynamically and automatically removed from display in each displaying broadcast zone window 375 without requiring restart of the broadcast zone function or requiring restart of the content sharing session on the appliance side. Thus, the second asset 401 b may be dynamically removed from the receiving broadcast zone window 370 and automatically removed from display in each displaying broadcast zone window 375 without interruption and/or restart of the content sharing session between the receiving broadcast zone window 370 on the appliance 140 side and each displaying broadcast zone window 375 on the user 355 side.

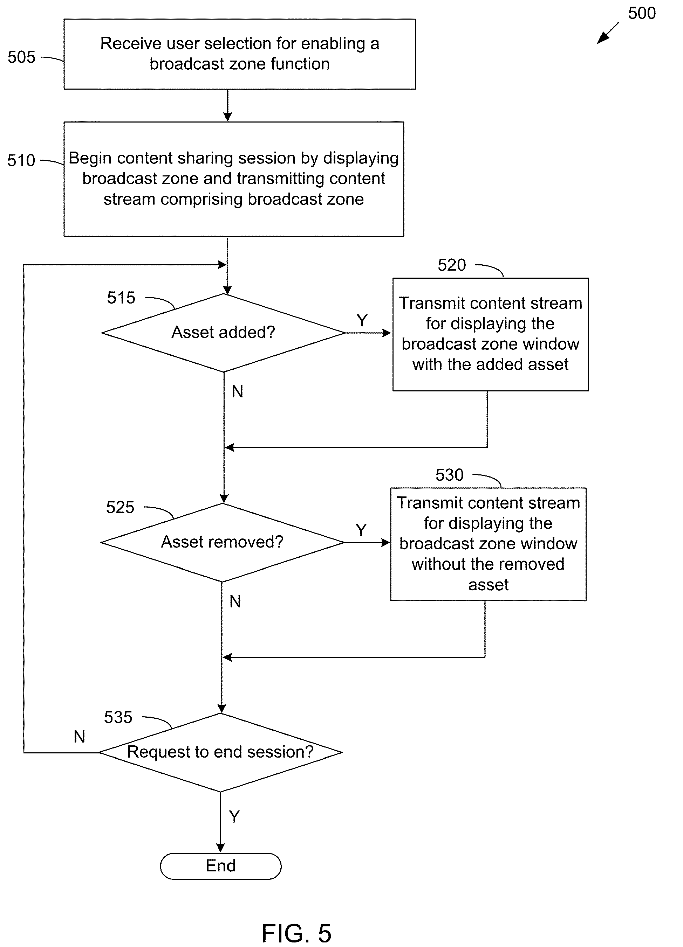

Figure 5 illustrates a flow diagram of method steps for automatically and dynamically displaying assets in a broadcast zone window, according to various embodiments of the present invention. Although the method steps are described in conjunction with the systems of Figures 1 - 4C, persons skilled in the art will understand that any system configured to perform the method steps, in any order, is within the scope of the present invention.

As shown, a method 500 begins at step 505, where the client application engine 350 receives a user selection for enabling a broadcast zone function for beginning a content sharing session with one or more user devices 355 (e.g., connected via data connection 357). In response, at step 510, the client application engine 350causes the beginning of the content sharing session by causing the displaying of a receiving broadcast zone window 370 within the workspace window 360 of the display 120 (on the appliance side). The receiving broadcast zone window 370 may be a highlighted region of the workspace window 360 or have a special boundary color or texture specifying the receiving broadcast zone window 370 within the workspace window 360.

At step 510, the client application engine 350 also generates and transmits to each connected user device 355 an initial content stream comprising a displaying broadcast zone window 375 corresponding to the receiving broadcast zone window 370. The content stream is received by each user device 355 which displays the displaying broadcast zone window 375 on a display. When the content sharing session is initiated, the client application engine 350 may capture and transmit the receiving broadcast zone window 370 by creating an orthographic projection within an application programming interfaces (API) on which the receiving broadcast zone window 370 is drawn. Any API configured for handling tasks related to multimedia may be used (e.g., Microsoft DirectX™). The orthographic projection may be rendered into a full-screen window on a digital video output of the appliance 140 (e.g., a data connection 357). A call may then be made to the GPU software developer kit (SDK) page to specify the region of the display 120 (comprising the receiving broadcast zone window 370) to be captured. The GPU drivers may create a frame buffer of the captured region which is rendered into the orthographic projection. From the frame buffer, the captured region may be rendered on the digital video output of the appliance 140. The content stream may be broadcast via APIs or command-line APIs in the content stream which informs the user devices 355 that the appliance 140 is transmitting shared content. When each user device 355 receives the content stream, the user device 355 may, for example, automatically initiate a video conference codec to go into a presentation mode to display the content stream.

At step 510, the position and size of the receiving broadcast zone window 370 may be predefined in configuration parameters that specifies a broadcast zone pixel space defining the receiving broadcast zone window 370 or may be dynamically created by the user. The content stream (broadcast zone pixel space) may be transmitted to each user device 355 through a data connection 357. The specification of the broadcast zone window 370 pixel size and location may be made via a Web-based configuration portal within which all configuration parameters may be updated or edited.

At step 515, the client application engine 350 determines whether it detects a new asset that is received by/added to the receiving broadcast zone window 370 (a new asset has been moved within the receiving broadcast zone window 370) of the display 120 (on the appliance side) by a user. If not, the method 500 continues at step 525. If so, in response, at step 520, the client application engine 350 automatically generates and transmits to each user device 355 another content stream comprising a corresponding displaying broadcast zone window 375 that includes the newly added asset therein. The content stream is received by each user device 355 which displays the corresponding displaying broadcast zone window 375 including the newly added asset.

Optionally, at step 515, the client application engine 350 determines whether a new asset is even only partially moved into the receiving broadcast zone window 370 of the display 120 (on the appliance side) by a user; if so, in response, at step 520, the new asset is broadcast by the client application engine 350 to each user device 355. In other words, when a first pixel of a new asset is detected within the receiving broadcast zone window 370, this first pixel is the trigger to then broadcast the new asset by the client application engine 350. In this case, the client application engine 350 operates as a sort of live feeder of whatever asset is within the receiving broadcast zone window 370 of the display 120 (on the appliance side), whether such asset is still being dragged or not: as soon as even one pixel of a new asset is moved into the receiving broadcast zone window 370, such new asset is broadcast to each user device 355. In some embodiments, optionally only the portion (e.g. one or more pixels) of the new asset that is in the receiving broadcast zone window 370 of the display 120 may be broadcast by the client application engine 350 to each user device 355, while the remaining part of the new asset (e.g., pixel(s) other than said one or more pixels) that is not in the receiving broadcast zone window 370 is not broadcast, unless it is brought into the receiving broadcast zone window 370 as well. Additionally, in other embodiments of the method according to the invention, some specific assets may be not allowed to be moved into the receiving broadcast zone window 370 of the display 120 (on the appliance side), for instance because it is classified as a not broadcastable asset; in this case, even if a user drags one of such specific not allowed assets towards the receiving broadcast zone window 370, once this specific not allowed asset hits the edge of the receiving broadcast zone window 370, the client application engine 350 does not allow the user to continue dragging it in.

At step 520, in some embodiments, the client application engine 350 may also transmit to each user device 355 a trigger for enabling the asset in the content stream to be displayed by the user device 355. In these embodiments, the broadcast zone window 370 comprises a user interface from which to designate an underlying XML-based definition schema. Inclusion of a 'Tag' within the XML-based schema may be mapped to the 3rd party API call or script which may be triggered when an asset is added or removed from the receiving broadcast zone window 370. In these embodiments, the trigger may comprise an automated 3rd Party API call (synonymous with a macro) associated with the broadcast zone window 370 that is triggered when an asset is added to the broadcast zone window 370. Also, integration with a videoconferencing (VTC) Codec may include a 'Content' tag to be associated with the API call to enable the 'Content Sharing' feature of the VTC Codec. Note that the content displayed within the broadcast zone window 370 may be continually output to the user devices 355 during the content sharing session, but any triggers may automatically occur based on an asset being added to or removed from the broadcast zone window 370.The trigger initiates a 3rd Party API call which is configurable within the application configuration parameters. The nature of these API calls is to flexibly support custom integrations with both identified and as yet un-identified 3rd party user devices 355.

At steps 515-520, the newly added asset may originate from within or outside the workspace window 360. In some embodiments, the newly added asset may comprise an asset that is not previously shared with (transmitted to) and displayed at each user device 355 until the newly added asset is added to the receiving broadcast zone window 370. In some embodiments, the newly asset may be added to the receiving broadcast zone window 370 and displayed in each displaying broadcast zone window 375 while other content (e.g., at least one other asset) is currently being shared with the connected user devices 355. In some embodiments, the newly added asset may be dynamically added to the receiving broadcast zone window 370 and automatically displayed in the corresponding displaying broadcast zone window 375 at each user device 355 without requiring further interactions or intervention from the user, without requiring restart of the broadcast zone function, and/or without requiring interruption of the content sharing session.

At step 525, the client application engine 350 determines whether it detects an asset has been removed from the receiving broadcast zone window 370 of the display 120 (on the appliance side) by a user. If not, the method 500 continues at step 535. If so, in response, at step 530, the client application engine 350 automatically generates and transmits to each user device 355 another content stream comprising a corresponding displaying broadcast zone window 375 without the newly removed asset. The content stream is received by each user device 355 which displays the corresponding displaying broadcast zone window 375 without the newly removed asset. In some embodiments, the client application engine 350 may also transmit to each user device 355 a trigger for removing the asset in the displaying broadcast zone window 375 displayed by the user device 355. For example, the trigger may disable the 'Content Sharing' feature of the VTC Codec for the asset removed by the user.

At steps 525-530, the newly removed may be removed from the receiving broadcast zone window 370 while other content (e.g., at least one other asset) is currently being shared with the connected user devices 355. In some embodiments, the newly removed asset may be dynamically removed from the receiving broadcast zone window 370 and automatically removed from display in the corresponding displaying broadcast zone window 375 at each user device 355 without requiring further interactions or intervention from the user, without requiring restart of the broadcast zone function, and/or without requiring interruption of the content sharing session.

At step 535, the client application engine 350 determines whether a request to disable the broadcast zone function for ending the content sharing session with the user devices 355 is received. If not, the method 500 continues at step 515. If so, the method 500 ends.

In an alternative embodiment, the receiving broadcast zone window 370 implements a "snap grid" feature. The receiving broadcast zone window 370 comprises multiple predefined "snap grid zones" for receiving assets. The broadcast zone window 370 comprises a user interface from which to designate an underlying XML-based "snap grid" definition schema. An asset is added to the receiving broadcast zone window 370 by interactively "snapping" into one of the "snap grid zones" by a user. When the assets added to the receiving broadcast zone window 370 approaches a percentage based tolerance threshold (e.g., configurable size or placement in relation to the defined zone broadcast zone window 370), a signal is displayed to the user indicating that if the user drops the asset (e.g., releases the mouse click or releases touch), this will cause the asset to "snap" into and fill a defined "snap grid zone". In these embodiments, the various triggers discussed above may be initiated when an asset is "snapped" into or out of one of the "snap grid zones".

In an alternative embodiment, a broadcast zone window 370 is shared between two different displays 120. The content of the shared broadcast zone window 370 may be automatically and dynamically broadcast to connected user devices 355. In these embodiments, the two different displays 120 are each connected with and driven by two discrete appliances 140 operated by two different users. For example, the discrete appliances 140 may comprise appliance 140(A) and appliance 140(B) of Figure 2. As shown in Figure 2, display system 100(A) includes appliance 140(A) and display 120(A), and display system 100(B) includes appliance 140(B) and display 120(B). The two display systems 100(A) and 100(B) are coupled together via the communication infrastructure 210. A broadcast zone window 370 is generated and displayed by each discrete display system 100(A) and 100(B) and may be shared with any connected user devices 355 individually or simultaneously.

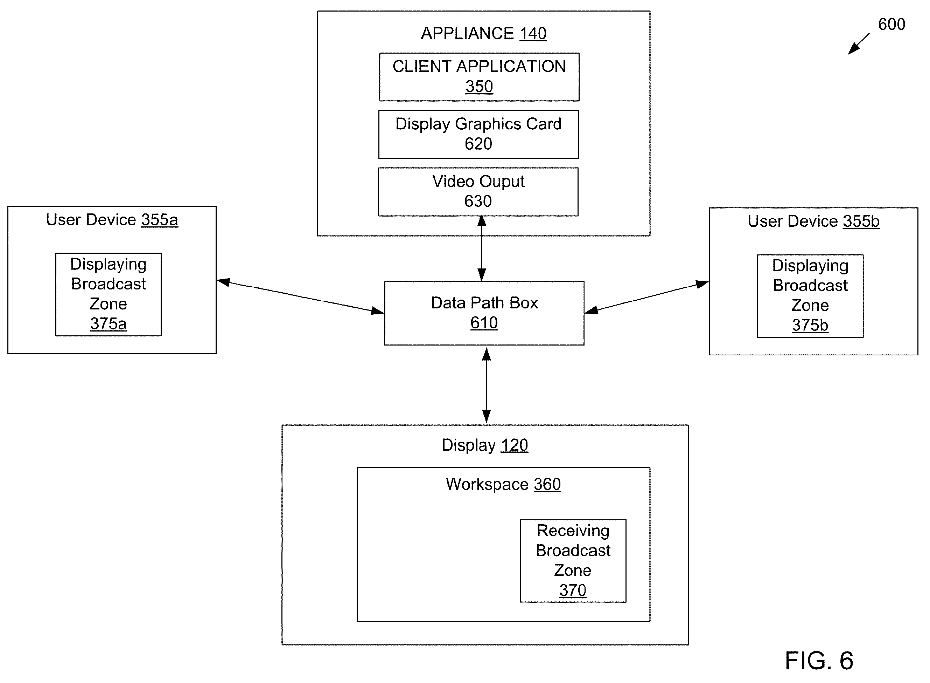

Figure 6 is a conceptual diagram of a collaboration system 600 configured to share a content stream with user devices using a static broadcast zone, according to various embodiments of the present invention. Several of the components shown in Figure 6 are described above in relation to Figures 1-5 and are not discussed in detail here. As shown, collaboration system 600 includes, without limitation, an appliance 140 connected to a data path box 610, which in turn is also connected with a plurality of user devices 355 (such as 355a, 355b, etc.), and a display 120.The appliance 140 comprises a client application engine 350, display graphics card 620, and a digital video output 630.

In the embodiments described in relation to Figure 6, the receiving broadcast zone window 370 on the appliance side may comprise a static window having a fixed size (dimensions) and position (location) within the workspace window 360 shown in the display 120. For example, the receiving broadcast zone window 370 may be defined by a top-left x, y coordinate within the workspace window 360 and a size (width, height) as specified in a configuration setting through a web administration portal. The size and position of the receiving broadcast zone window 370 within the workspace window 360 may be specified by a user or predefined using default values (e.g., a default size of 1920x1080 located in the center of the workspace window 360).

In these embodiments, the data path box 610 may be used as an intermediate box used between the appliance 140 and the user devices 355 and display 120. The display graphics card 620 of the appliance 140 may generate a content stream(comprising display graphics information) that is transmitted to the data path box 610 via the digital video output 630 (DVI, DisplayPort) of the appliance 140. The display graphics information in the content stream may specify the fixed size and position of the receiving broadcast zone window 370 within the workspace window 360, whereby the display graphics card 620 may capture certain data from the data stream. The data path box 610 may receive the content stream and extract, from the display graphics information, the fixed size and position of the receiving broadcast zone window 370. The data path box 610 may then send the extracted size and position information for the receiving broadcast zone window 370 and the received content stream to the display 120 and each user device 355. The display 120 may display the content stream and the receiving broadcast zone window 370 according to the extracted size and position information along with the remainder of the data from the display graphics card. The video conference codec of each user device 355 may display the content stream and a corresponding displaying broadcast zone window 375 according to the extracted size and position information.

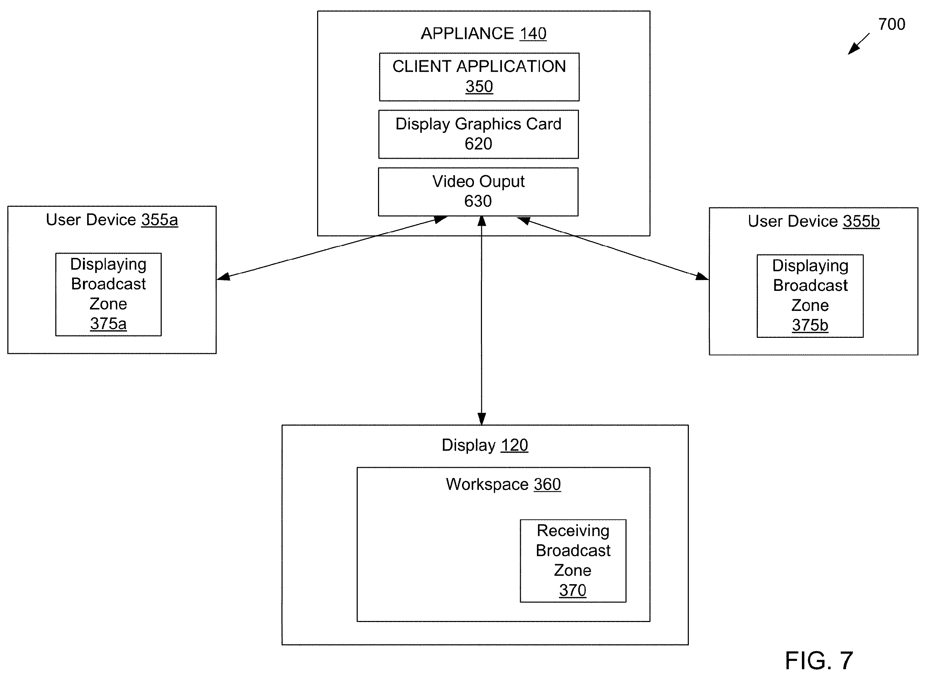

Figure 7 is a conceptual diagram of a collaboration system 700 configured to share a content stream with user devices using a dynamic broadcast zone, according to various embodiments of the present invention. Several of the components shown in Figure 7 are described above in relation to Figures 1-5 and are not discussed in detail here. As shown, collaboration system 700 includes, without limitation, an appliance 140 connected to a plurality of user devices 355 (such as 355a, 355b, etc.), and a display 120.The appliance 140 comprises a client application engine 350, display graphics card 620, a digital video output 630, CPU (not shown), and GPU (not shown).

In the embodiments described in relation to Figure 7, the receiving broadcast zone window 370 on the appliance side may comprise a real time resizsable/repositionable window having a size (dimensions) and/or position (location) within the workspace window 360 that may be changed at will by a user during a content sharing session. In these embodiments, the size and/or position of the receiving broadcast zone window 370 may be changed at will by a user in real time during a content sharing session without interrupting the content sharing session, without requiring restart of the content sharing session, and without requiring restart of the broadcast zone function. For example, the size and/or position of the receiving broadcast zone window 370 may be specified through a user interface that allows a user to dynamically select the size and position visually. For example, the receiving broadcast zone window 370 may comprise a displayed rectangular shape which the user could drag, size and position to the desired location and size that is to be broadcast to the user devices 355. The user may also dynamically change the location and dimensions of the receiving broadcast zone window 370, e.g., by dragging or resizing the rectangle shape. In these embodiments, the workspace window 360 and/or the receiving broadcast zone window 370 may comprise a user interface.

In comparison to the collaboration system 600 of Figure 6, the collaboration system 700 of Figure 7 eliminates the need for the data path box 610. Rather, in the collaboration system 700, the digital video output 630 of the appliance 140 may be directly connected with the plurality of user devices 355 and the display 120 without use of the data path box 610.

To provide the real-time size and position capabilities of the receiving broadcast zone window 370, the display graphics card 620 of the appliance 140 may be configured to allow a real-time user interface (such as the workspace window 360 and/or the receiving broadcast zone window 370) to define and specify the size and/or position of the receiving broadcast zone window 370 based on user inputs received through the user interface. For example, the client application 350of the appliance 140 may command the display graphics card 620 to output the receiving broadcast zone window 370 (location and size) via a physical video output.API calls may be sent to the CPU executing on the appliance 140 to program the user interface (e.g., touch or pointer interface) to define and specify the size and/or position of the receiving broadcast zone window 370 within the workspace window 360.

The display graphics card 620 may then generate a content stream containing display graphics information that specifies the size and position of the receiving broadcast zone window 370 within the workspace window 360. For example, API calls may be sent to the display graphics card 620 to communicate with the GPU executing on the appliance 140 to extract, from the display graphics information, the fixed size and position of the receiving broadcast zone window 370, which is driven to the digital video output 630 of the appliance 140. The digital video output 630 may then send the extracted size and position information for the receiving broadcast zone window 370 and the content stream to the display 120 and each user device 355. The display 120 may display the content stream and the receiving broadcast zone window 370 according to the extracted size and position information. The video conference codec of each user device 355 may display the content stream and a corresponding displaying broadcast zone window 375 according to the extracted size and position information. In some embodiments, the local video conference codec may process the content stream (a region of the display) as a "content" source and sends it to the remote user devices 355 via standard video conferencing protocols.

### Further Exemplary Embodiments

Exemplary embodiments provided in accordance with the presently disclosed subject matter include, but are not limited to, the following:
Embodiment 1: a computer-implemented method for sharing content across different devices, the method comprising: causing a zone window to be displayed within a display of a first machine, the size or position of the zone window being user-changeable within the display and the zone window comprising a sub-area of the display and comprising a zone window content region; detecting that a first digital asset originating from outside the zone window has been moved within the zone window; and, in response to detecting the first digital asset, sharing the first digital asset with at least one client device by transmitting a first content stream to the at least one client device, wherein the first content stream comprises the zone window content and the first digital asset included in the zone window.
Embodiment 2: the computer-implemented method of embodiment 1, wherein the first digital asset resides within the display outside the zone window prior to being placed within the zone window.
Embodiment 3: the computer-implemented method of embodiment 2, wherein the first digital asset is not transmitted to the at least one client device while residing within the display outside the zone window.
Embodiment 4: the computer-implemented method of embodiment 1, further comprising: prior to causing the zone window to be displayed, causing a content sharing session with the at least one client device to begin, wherein detecting that the first digital asset has been placed within the zone window and transmitting the first content stream to the at least one client device occur without restarting or interrupting the content sharing session.
Embodiment 5: the computer-implemented method of embodiment 1, wherein: the first content stream is automatically transmitted to the at least one client device once the first digital asset is detected within the zone window.
Embodiment 6: the computer-implemented method of embodiment 1, further comprising: detecting that a second digital asset has been moved within the zone window; and, in response to detecting the second digital asset, sharing the second digital asset with at least one client device by transmitting a second content stream to the at least one client device, wherein the second content stream comprises the zone window and the first and second digital assets included in the zone window.
Embodiment 7: the computer-implemented method of embodiment 6, wherein the second digital asset is received in the zone window and the second content stream is transmitted to the at least one client device without restarting or interrupting the content sharing session.
Embodiment 8: the computer-implemented method of embodiment 6, further comprising: detecting that the second digital asset has been removed from the zone window; and, in response, transmitting a third content stream to the at least one client device, wherein the third content stream comprises the zone window and the first digital asset included in the zone window, but not the second digital asset.
Embodiment 9: the computer-implemented method of embodiment 1, wherein the first digital asset comprises an image, video, document, or a graphical user interface (GUI).
Embodiment 10: a non-transitory computer-readable medium storing program instructions that, when executed by a processor, cause the processor to share content in a zone window by performing the steps of: causing a zone window to be displayed within a display of a first machine, the size or position of the zone window being user-changeable within the display and the zone window comprising a sub-area of the display and comprising a zone window content region; detecting that a first digital asset originating from outside the zone window has been moved within the zone window; and, in response to detecting the first digital asset, sharing the first digital asset with at least one client device by transmitting a first content stream to the at least one client device, wherein the first content stream comprises the zone window content and the first digital asset included in the zone window.
Embodiment 11: the non-transitory computer-readable medium of embodiment 10, wherein the first digital asset resides within the display outside the zone window prior to being placed within the zone window.
Embodiment 12: the non-transitory computer-readable medium of embodiment 10, wherein the first digital asset is not transmitted to the at least one client device while residing within the display outside the zone window.
Embodiment 13: the non-transitory computer-readable medium of embodiment 10, further comprising performing the steps of: prior to causing the zone window to be displayed, causing a content sharing session with the at least one client device to begin, wherein detecting that the first digital asset has been placed within the zone window and transmitting the first content stream to the at least one client device occur without restarting or interrupting the content sharing session.
Embodiment 14: the non-transitory computer-readable medium of embodiment 10, wherein: the first content stream is automatically transmitted to the at least one client device once the first digital asset is detected within the zone window.
Embodiment 15: the non-transitory computer-readable medium of embodiment 10, further comprising performing the steps of: detecting that a second digital asset has been moved within the zone window; and, in response to detecting the second digital asset, sharing the second digital asset with at least one client device by transmitting a second content stream to the at least one client device, wherein the second content stream comprises the zone window and the first and second digital assets included in the zone window.
Embodiment 16: the non-transitory computer-readable medium of embodiment 10, wherein the first content stream is configured such that the first digital asset is displayed within a zone window displayed on a display of the at least one client device in a substantially similar configuration as the first digital asset is displayed within the zone window displayed on the display of the first machine.
Embodiment 17: the non-transitory computer-readable medium of embodiment 10, wherein the first content stream is configured such that the first digital asset is displayed within a zone window displayed on a display of the at least one client device in a substantially similar relative size, position, and aspect ratio as the first digital asset is displayed within the zone window displayed on the display of the first machine.
Embodiment 18: the non-transitory computer-readable medium of embodiment 10, wherein the first digital asset comprises interactive renderable content.
Embodiment 19: a computer device configured for sharing content in a zone window, comprising: a memory that includes a client application engine; and a processor coupled to the memory, wherein, upon executing the client application engine, the processor is configured to: cause a zone window to be displayed within a display of a first machine, the size or position of the zone window being user-changeable within the display and the zone window comprising a sub-area of the display and comprising a zone window content region; detect that a first digital asset originating from outside the zone window has been moved within the zone window; and, in response to detecting the first digital asset, share the first digital asset with at least one client device by transmitting a first content stream to the at least one client device, wherein the first content stream comprises the zone window content and the first digital asset included in the zone window.
Embodiment 20: the computer device of embodiment 19, wherein the processor is further configured for: prior to causing the zone window to be displayed, causing a content sharing session with the at least one client device to begin, wherein detecting that the first digital asset has been placed within the zone window and transmitting the first content stream to the at least one client device occur without restarting or interrupting the content sharing session.
Embodiment 21: the computer device of embodiment 19, wherein the processor is further configured for: prior to causing the zone window to be displayed, causing a content sharing session with the at least one client device to begin, wherein the size or position of the zone window is user-changeable within the display without restarting or interrupting the content sharing session.
Embodiment 22: the computer device of embodiment 19, wherein the processor is further configured for: sharing content of the entire display of the first machine with a second machine concurrently with sharing the first digital asset with the at least one client device.
Embodiment 23: the computer device of embodiment 19, wherein the processor is further configured for: causing another zone window to be displayed within a display of the first machine.

In sum, an appliance device is configured to share content in a zone window. A content sharing session may be initiated by a user on the appliance device to share content with at least one client device. In response, the appliance device may display a zone window that provides for transmitting, via a content stream, to the at least one client device which displays the zone window with the received content stream. The appliance device may detect that a first digital asset has been added to the zone window by a user. In response, the zone window including the first digital asset is transmitted, via another content stream, to the at least one client device which displays the zone window with the first digital asset. In some embodiments, the size and position of the zone window may be dynamically changed by a user during the content sharing session.

At least one advantage of the disclosed technique is that digital assets may be dynamically added to a zone window (for example a user may drag assets in/out of the broadcast zone) and automatically shared with client devices. Another advantage of the disclosed technique is that newly added assets to the zone window may be dynamically shared and displayed at each client device without requiring restart or interruption of the content sharing session. A further advantage of the disclosed technique is that an asset not previously shared may be automatically shared by simply adding the asset to the zone window.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for sharing content across different devices (355), the method comprising:
causing a zone window (370) to be displayed within a display (120) of a first machine, the size or position of the zone window (370) being user-changeable within the display (120) and the zone window (370) comprising a sub-area of the display (120) and comprising a zone window content region;
detecting that a first digital asset (401 a) originating from outside the zone window (370) has been moved within the zone window (370); and
in response to detecting the first digital asset (401 a), sharing the first digital asset (401 a) with at least one client device (355) by transmitting a first content stream to the at least one client device (355), wherein the first content stream comprises the zone window content and the first digital asset (401 a) included in the zone window (370).

2. The computer-implemented method of claim 1, wherein the first digital asset (401 a) resides within the display (120) outside the zone window (370) prior to being placed within the zone window (370), optionally wherein the first digital asset (401 a) is not transmitted to the at least one client device (355) while residing within the display (120) outside the zone window (370).

3. The computer-implemented method of claim 1 or 2, further comprising:
prior to causing the zone window (370) to be displayed, causing a content sharing session with the at least one client device (355) to begin,
wherein detecting that the first digital asset (401 a) has been placed within the zone window (370) and transmitting the first content stream to the at least one client device (355) occur without restarting or interrupting the content sharing session.

4. The computer-implemented method of any one of the preceding claims, wherein:
the first content stream is automatically transmitted to the at least one client device (355) once the first digital asset (401 a) is detected within the zone window (370).

5. The computer-implemented method of any one of the preceding claims, further comprising:
detecting that a second digital asset (401 b) has been moved within the zone window (370); and
in response to detecting the second digital asset (401 b), sharing the second digital asset (401 b) with at least one client device (355) by transmitting a second content stream to the at least one client device (355), wherein the second content stream comprises the zone window (370) and the first and second digital assets (401 a, 401 b) included in the zone window (370),
optionally wherein the second digital asset (401 b) is received in the zone window (370) and the second content stream is transmitted to the at least one client device (355) without restarting or interrupting the content sharing session.

6. The computer-implemented method of claim 5, further comprising:
detecting that the second digital asset (401 b) has been removed from the zone window (370); and
in response, transmitting a third content stream to the at least one client device (355), wherein the third content stream comprises the zone window (370) and the first digital asset (401 a) included in the zone window (370), but not the second digital asset (401 b).

7. The computer-implemented method of any one of the preceding claims, wherein the first digital asset (401 a) comprises an image, video, document, or a graphical user interface (GUI).

8. The computer-implemented method of any one of the preceding claims, wherein the first content stream is configured such that the first digital asset (401 a) is displayed within a zone window (370) displayed on a display (120) of the at least one client device (355) in a substantially similar configuration as the first digital asset (401 a) is displayed within the zone window (370) displayed on the display (120) of the first machine.

9. The computer-implemented method of any one of the preceding claims, wherein the first content stream is configured such that the first digital asset (401 a) is displayed within a zone window (370) displayed on a display (120) of the at least one client device (355) in a substantially similar relative size, position, and aspect ratio as the first digital asset (401 a) is displayed within the zone window (370) displayed on the display (120) of the first machine.

10. The computer-implemented method of any one of the preceding claims, wherein the first digital asset (401 a) comprises interactive renderable content.

11. The computer-implemented method of any one of the preceding claims, further comprising:
prior to causing the zone window (370) to be displayed, causing a content sharing session with the at least one client device (355) to begin, wherein the size or position of the zone window (370) is user-changeable within the display (120) without restarting or interrupting the content sharing session.

12. The computer-implemented method of any one of the preceding claims, further comprising:
sharing content of the entire display (120) of the first machine with a second machine concurrently with sharing the first digital asset (401 a) with the at least one client device (355).

13. The computer-implemented method of any one of the preceding claims, further comprising:
causing another zone window (370) to be displayed within a display (120) of the first machine.

14. A computer program product adapted to perform, when executed by a processor (111), the computer-implemented method for sharing content across different devices (355) according to any one of claims 1 to 13.

15. A non-transitory computer-readable medium storing program instructions that, when executed by a processor (111), cause the processor (111) to share content in a zone window (370) by performing the computer-implemented method for sharing content across different devices (355) according to any one of claims 1 to 13.

16. A computer device (110) configured for sharing content in a zone window (370), comprising:
a memory (112) that includes a client application engine (350); and
a processor (111) coupled to the memory (112), wherein, upon executing the client application engine, the processor (111) is configured to perform the computer-implemented method for sharing content across different devices (355) according to any one of claims 1 to 13.
